# EUROPEAN PATENT APPLICATION

(11) **EP 3 065 485 A1**
(43) Date of publication of application: **07.09.2016**
(21) Application number: 14857512.9
(22) Date of filing: 30.10.2014
(51) Int. Cl.: H04W 72/04, H04W 8/00, H04W 92/18

(54) **MOBILE COMMUNICATION SYSTEM AND USER TERMINALS**

(30) Priority: 01.11.2013 US 201361898760 P
(71) Applicant: Kyocera Corporation, Kyoto-shi, Kyoto 612-8501 (JP)
(72) Inventor: FUKUTA, Noriyoshi, Kyoto-shi Kyoto 612-8501 (JP); ADACHI, Hiroyuki, Kyoto-shi Kyoto 612-8501 (JP); MATSUMOTO, Naohisa, Kyoto-shi Kyoto 612-8501 (JP); YAMAZAKI, Chiharu, Kyoto-shi Kyoto 612-8501 (JP); FUJISHIRO, Masato, Kyoto-shi Kyoto 612-8501 (JP); MORITA, Kugo, Kyoto-shi Kyoto 612-8501 (JP)
(74) Representative: Schwabe - Sandmair - Marx
(86) International application number: PCT/JP2014/078857
(87) International publication number: WO 2015/064679

(57) **Abstract**

A mobile communication system includes a user terminal that supports D2D communication that is direct device-to-device communication. A time-frequency resource available in the mobile communication system includes: a synchronization signal resource in which a D2D synchronization signal that is a synchronization signal for the D2D communication should be located; and a discovery signal resource in which a D2D discovery signal that is a signal for discovering a proximal terminal for the D2D communication should be located. The user terminal receiving the D2D synchronization signal identifies a location of the discovery signal resource on the basis of a location of the synchronization signal resource in which the received D2D synchronization signal is located.

## Description

### TECHNICAL FIELD

The present invention relates to a mobile communication system that supports D2D communication, and a user terminal thereof.

### BACKGROUND ART

In 3GPP (3rd Generation Partnership Project) which is a project aiming to standardize a mobile communication system, the introduction of Device to Device (D2D) communication is discussed as a new function after Release 12 (see Non Patent Document 1).

In the D2D communication, in a group configured by a plurality of adjacent user terminals, direct device-to-device communication is performed without passing through a network. On the other hand, in cellular communication which is normal communication in a mobile communication system, a user terminal makes communication through a network.

In the D2D communication, since radio communication with low transmission power can be performed between adjacent user terminals, power consumption of the user terminal and a load on the network can be reduced in comparison with the cellular communication.

### PRIOR ART DOCUMENTS

### NON PATENT DOCUMENT

[Non Patent Document 1] 3GPP technical report "TR 22.803 V12.2.0" June, 2013

### SUMMARY OF INVENTION

To start D2D communication between a user terminal and a proximal terminal, it is preferable that a proximity discovery procedure for the D2D communication is performed. The proximity discovery procedure is a procedure in which the proximal terminal is identified (discovered) after establishing synchronization with the proximal terminal.

However, if such a proximity discovery procedure is not efficient, there may arise problems that time-frequency resources are uselessly consumed and a prompt start of the D2D communication is prevented.

Therefore, an object of the present invention is to provide a mobile communication system and a user terminal capable of efficiently performing the proximity discovery procedure for the D2D communication.

A mobile communication system according to a first aspect includes a user terminal that supports D2D communication that is direct device-to-device communication. A time-frequency resource available in the mobile communication system includes: a synchronization signal resource in which a D2D synchronization signal that is a synchronization signal for the D2D communication should be located; and a discovery signal resource in which a D2D discovery signal that is a signal for discovering a proximal terminal for the D2D communication should be located. The user terminal receiving the D2D synchronization signal identifies a location of the discovery signal resource on the basis of a location of the synchronization signal resource in which the received D2D synchronization signal is located.

A user terminal according to a second aspect supports D2D communication that is a direct device-to-device communication, in a mobile communication system. A time-frequency resource available in the mobile communication system includes: a synchronization signal resource in which a D2D synchronization signal that is a synchronization signal for the D2D communication should be located; and a discovery signal resource in which a D2D discovery signal that is a signal for discovering a proximal terminal for the D2D communication is should be located. The user terminal comprises: a receiving unit that receives the D2D synchronization signal; and a control unit that identifies a location of the discovery signal resource on the basis of a location of the synchronization signal resource in which the received D2D synchronization signal is located.

### BRIEF DESCRIPTION OF DRAWINGS

Fig. 1 is a configuration diagram of an LTE system according to a first embodiment to a fifth embodiment.
Fig. 2 is a block diagram of a UE according to the first embodiment to the fifth embodiment.
Fig. 3 is a block diagram of an eNB according to the first embodiment to the fifth embodiment.
Fig. 4 is a protocol stack diagram of a radio interface according to the first embodiment to the fifth embodiment.
Fig. 5 is a configuration diagram of a radio frame according to the first embodiment to the fifth embodiment.
Fig. 6 is a diagram for illustrating the D2D communication according to the first embodiment to the fifth embodiment.
Fig. 7 is a diagram illustrating a configuration of a radio resource (time-frequency resource) according to the first embodiment.
Fig. 8 is a diagram illustrating a Discovery procedure according to the first embodiment.
Fig. 9 is a diagram illustrating a configuration of a radio resource (time-frequency resource) according to the second embodiment.
Fig. 10 is a diagram illustrating a Discovery procedure according to the second embodiment.
Fig. 11 is diagram illustrating a system configuration according to the third embodiment.
Fig. 12 is a sequence diagram illustrating operation according to the third embodiment.
Fig. 13 is a sequence diagram illustrating operation according to the fourth embodiment.
Fig. 14 is a sequence diagram illustrating operation according to the fifth embodiment.

### DESCRIPTION OF EMBODIMENTS

### [Overview of Embodiment]

A mobile communication system according to the first to fifth embodiment includes a user terminal that supports D2D communication that is direct device-to-device communication. A time-frequency resource available in the mobile communication system includes: a synchronization signal resource in which a D2D synchronization signal that is a synchronization signal for the D2D communication should be located; and a discovery signal resource in which a D2D discovery signal that is a signal for discovering a proximal terminal for the D2D communication should be located. The user terminal receiving the D2D synchronization signal identifies a location of the discovery signal resource on the basis of a location of the synchronization signal resource in which the received D2D synchronization signal is located.

In the first embodiment, a location of the discovery signal resource is associated with a location of the synchronization signal resource.

In the first embodiment, the number of sub-channels of the discovery signal resource is set to the prescribed number of sub-channels, or set to the same number of sub-channels as the number of sub-channels of the synchronization signal resource.

In the second embodiment, the time-frequency resource available in the mobile communication system further includes a control information resource in which control information related to the D2D discovery signal should be located. A location of the control information resource is associated with a location of the synchronization signal resource. The control information includes a parameter related to a transmission method of the D2D discovery signal and the location of the discovery signal resource. The user terminal receiving the D2D synchronization signal receives the control information depending on the location of the synchronization signal resource in which the received D2D synchronization signal is located and identifies the location of the discovery signal resource and the transmission method of the D2D discovery signal depending on the parameter included in the received control information.

In the second embodiment, the number of sub-channels of the control information resource is set to the prescribed number of sub-channels, or set to the same number of sub-channels as the number of sub-channels of the synchronization signal resource.

In the third embodiment, the mobile communication system includes a relay terminal having capability to perform data relay by using the D2D communication. The relay terminal transmits the D2D synchronization signal having a predetermined sequence. The user terminal receiving the D2D synchronization signal determines whether or not a transmission source of the D2D synchronization signal is the relay terminal on the basis of the sequence of the received D2D synchronization signal.

In the third embodiment, the relay terminal transmits the D2D discovery signal only when it is determined that a user terminal as the data relay target exists.

In the third embodiment, the relay terminal transmits the D2D synchronization signal having the predetermined sequence at a predetermined transmission interval when determined that a user terminal as the data relay target exists. The relay terminal transmits the D2D synchronization signal having the predetermined sequence at a transmission interval different from the predetermined transmission interval when determined that a user terminal as the data relay target does not exist.

In the third embodiment, the predetermined sequence applied to the D2D synchronization signal is different from a sequence applied to a synchronization signal for cellular communication.

In the third embodiment, the user terminal determining that the transmission source of the D2D synchronization signal is the relay terminal transmits a first D2D discovery signal to the relay terminal that is the transmission source of the D2D synchronization signal by using the identified discovery signal resource when desiring start of the data relay. The first D2D discovery signal is a type of the D2D discovery signal that does not require a response signal to be transmitted to the first D2D discovery signal.

In the third embodiment, the relay terminal receiving the first D2D discovery signal from the user terminal starts transmission of a second D2D discovery signal by using the discovery signal resource. The second D2D discovery signal is a type of the D2D discovery signal that requires the response signal to be transmitted to the second D2D discovery signal.

In the third embodiment, the second D2D discovery signal includes information for designating a time-frequency resource to be used for transmission of the response signal.

In the third embodiment, a location of the time-frequency resource to be used for the transmission of the response signal is associated with the location of the discovery signal resource. The user terminal receiving the second D2D discovery signal identifies the location of the time-frequency resource to be used for the transmission of the response signal on the basis of the location of the discovery signal resource in which the second D2D discovery signal is located.

In the fourth embodiment, the mobile communication system includes a network to which the relay terminal is connected. The relay terminal, when connecting to the network, transmits capability notification for notifying that the relay terminal has capability to perform the data relay, to the network.

In the fourth embodiment, the network receiving the capability notification, in addition to the normal measurement configuration, notifies the relay terminal of the measurement configuration for the relay terminal. The measurement configuration for the relay terminal designates an event-trigger type measurement report.

In the fourth embodiment, the relay terminal includes location information for identifying a geographical location of the relay terminal into the measurement report transmitted to the network.

In the third embodiment and the fourth embodiment, the network requests the relay terminal to start the transmission of the D2D synchronization signal. The relay terminal starts the transmission of the D2D synchronization signal in response to the request from the network.

In the fifth embodiment, the mobile communication system has a network that notifies the relay terminal of the measurement configuration for the relay terminal by broadcast.

In the fifth embodiment, the measurement configuration for the relay terminal includes a threshold value of radio intensity from a serving cell and/or a threshold value of radio intensity from a neighboring cell. The relay terminal, when the measured radio intensity reaches the threshold value, starts monitoring of a D2D synchronization signal or a D2D discovery signal transmitted by another relay terminal. The relay terminal, when determined that the other relay terminal does not exist around by the monitoring, starts transmission of the D2D synchronization signal.

In the third embodiment to the fifth embodiment, the relay terminal identifies the synchronization signal resource on the basis of the discovery signal resource assigned from the network or identifies the discovery signal resource on the basis of the synchronization signal resource assigned from the network.

A user terminal according to the third embodiment to the fifth embodiment supports D2D communication that is a direct device-to-device communication, in a mobile communication system. A time-frequency resource available in the mobile communication system includes: a synchronization signal resource in which a D2D synchronization signal that is a synchronization signal for the D2D communication should be located; and a discovery signal resource in which a D2D discovery signal that is a signal for discovering a proximal terminal for the D2D communication is should be located. The user terminal comprises: a receiving unit that receives the D2D synchronization signal; and a control unit that identifies a location of the discovery signal resource on the basis of a location of the synchronization signal resource in which the received D2D synchronization signal is located.

### [First Embodiment]

Hereinafter, an embodiment in which the present invention applies to the LTE system will be described.

### (System configuration)

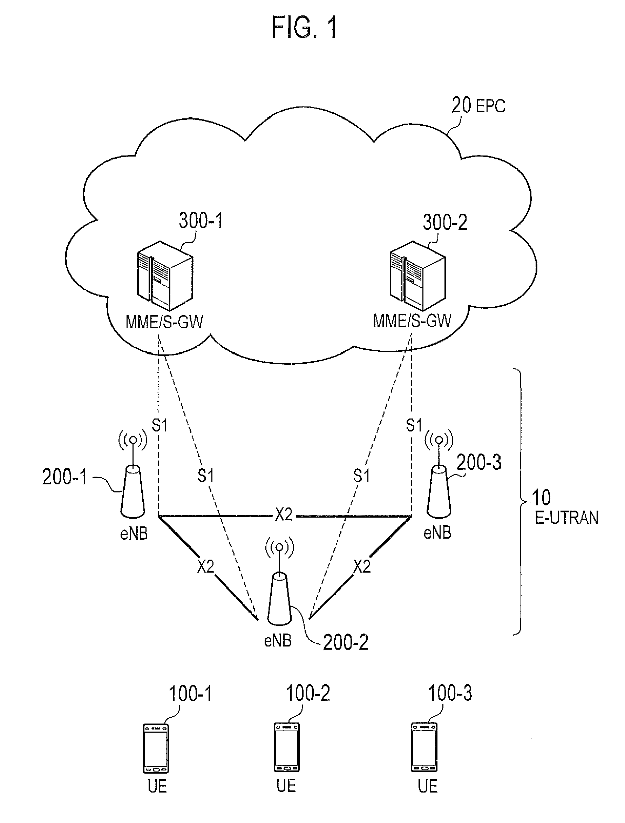

Fig. 1 is a configuration diagram of an LTE system according to the first present embodiment. As illustrated in Fig. 1, the LTE system according to the first embodiment comprises UEs (User Equipments) 100, E-UTRAN (Evolved-Universal Terrestrial Radio Access Network) 10, and EPC (Evolved Packet Core) 20.

The UE 100 corresponds to the user terminal. The UE 100 is a mobile communication device and performs radio communication with a cell (a serving cell) for a connection destination. Configuration of UE 100 will be described later.

The E-UTRAN 10 corresponds to a radio access network. The E-UTRAN 10 includes a plurality of eNBs 200 (evolved Node-Bs). The eNB 200 corresponds to a base station. The eNBs 200 are connected mutually via an X2 interface. Configuration of eNB 200 will be described later.

The eNB 200 manages one cell or a plurality of cells and performs radio communication with the UE 100 that establishes a connection with the cell. The eNB 200 has a radio resource management (RRM) function, a routing function of user data, and a measurement control function for mobility control and scheduling and the like. The "cell" is used as a term indicating a minimum unit of a radio communication area, and is also used as a term indicating a function of performing radio communication with the UE 100.

The EPC 20 corresponds to a core network. The E-UTRAN 10 and the EPC 20 constitute a network of the LTE system. The EPC 20 includes MMEs (Mobility Management Entities)/S-GWs (Serving-Gateways) 300. The MME performs various mobility controls and the like, for the UE 100. The S-GW performs transfer control of user data. The eNB 200 is connected to the MME/S-GW 300 via an S1 interface.

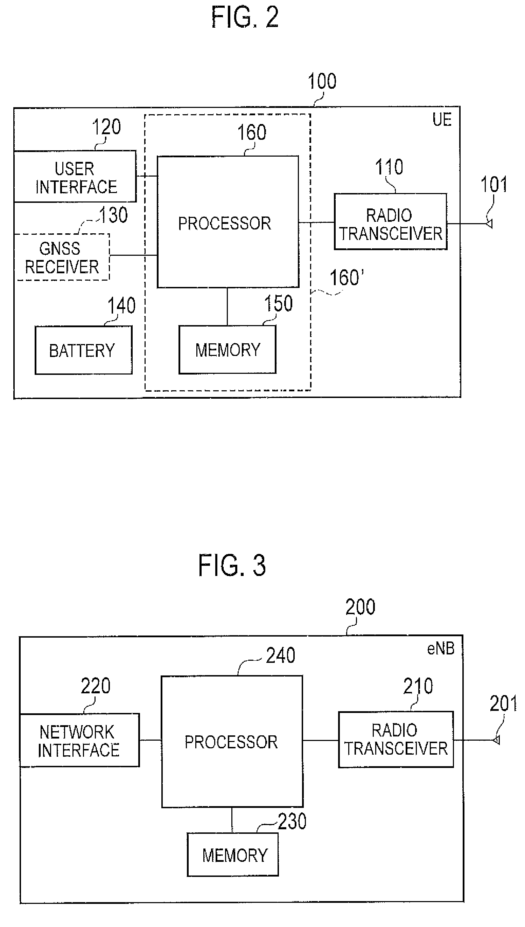

Fig. 2 is a block diagram of the UE 100. As illustrated in Fig. 2, the UE 100 comprises a plurality of antennas 101, a radio transceiver 110, a user interface 120, a GNSS (Global Navigation Satellite System) receiver 130, a battery 140, a memory 150, and a processor 160. The memory 150 and the processor 160 constitute a control unit. The UE 100 may not have the GNSS receiver 130. Furthermore, the memory 150 may be integrally formed with the processor 160, and this set (that is, a chipset) may be called a processor 160'.

The antennas 101 and the radio transceiver 110 are used to transmit and receive a radio signal. The radio transceiver 110 converts a baseband signal (transmitted signal) output from the processor 160 into the radio signal, and transmits the radio signal from the antennas 101. Furthermore, the radio transceiver 110 converts the radio signal received by the antennas 101 into the baseband signal (received signal), and outputs the baseband signal to the processor 160.

The user interface 120 is an interface with a user carrying the UE 100, and includes, for example, a display, a microphone, a speaker, various buttons and the like. The user interface 120 receives an operation from a user and outputs a signal indicating the content of the operation to the processor 160. The GNSS receiver 130 receives a GNSS signal in order to obtain location information indicating a geographical location of the UE 100, and outputs the received signal to the processor 160. The battery 140 accumulates a power to be supplied to each block of the UE 100.

The memory 150 stores a program to be executed by the processor 160 and information to be used for a process by the processor 160. The processor 160 includes a baseband processor that performs modulation and demodulation, encoding and decoding and the like of the baseband signal, and a CPU (Central Processing Unit) that performs various processes by executing the program stored in the memory 150. The processor 160 may further include a codec that performs encoding and decoding of sound and video signals. The processor 160 implements various processes and various communication protocols described later.

Fig. 3 is a block diagram of the eNB 200. As illustrated in Fig. 3, the eNB 200 comprises an antenna 201, a radio transceiver 210, a network interface 220, a memory 230, and a processor 240. The memory 230 and the processor 240 constitute a control unit. It is noted that the memory 230 may be integrally formed with the processor 240, and this set (that is, a chipset) may be called a processor.

The antenna 201 and the radio transceiver 210 are used to transmit and receive a radio signal. The radio transceiver 210 converts the baseband signal (transmitted signal) output from the processor 240 into the radio signal, and transmits the radio signal from the antenna 201. Furthermore, the radio transceiver 210 converts the radio signal received by the antenna 201 into the baseband signal (received signal), and outputs the baseband signal to the processor 240.

The network interface 220 is connected to the neighboring eNB 200 via the X2 interface and is connected to the MME/S-GW 300 via the S1 interface. The network interface 220 is used in communication performed on the X2 interface and communication performed on the S1 interface.

The memory 230 stores a program to be executed by the processor 240 and information to be used for a process by the processor 240. The processor 240 includes the baseband processor that performs modulation and demodulation, encoding and decoding and the like of the baseband signal and a CPU that performs various processes by executing the program stored in the memory 230. The processor 240 implements various processes and various communication protocols described later.

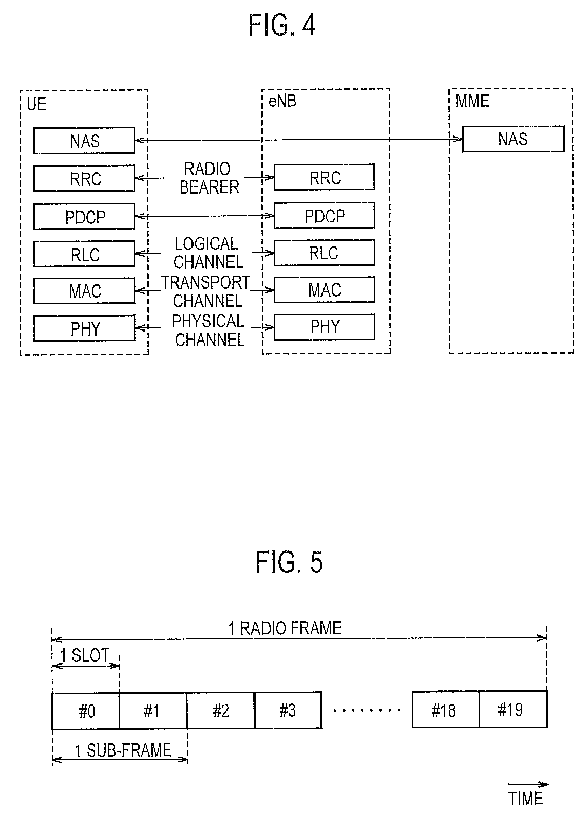

Fig. 4 is a protocol stack diagram of a radio interface in the LTE system. As illustrated in Fig. 4, the radio interface protocol is classified into a layer 1 to a layer 3 of an OSI reference model, wherein the layer 1 is a physical (PHY) layer. The layer 2 includes a MAC (Medium Access Control) layer, an RLC (Radio Link Control) layer, and a PDCP (Packet Data Convergence Protocol) layer. The layer 3 includes an RRC (Radio Resource Control) layer.

The PHY layer performs encoding and decoding, modulation and demodulation, antenna mapping and demapping, and resource mapping and demapping. Between the PHY layer of the UE 100 and the PHY layer of the eNB 200, user data and control signal are transmitted through the physical channel.

The MAC layer performs preferential control of data, and a retransmission process and the like by hybrid ARQ (HARQ). Between the MAC layer of the UE 100 and the MAC layer of the eNB 200, user data and control signal are transmitted via a transport channel. The MAC layer of the eNB 200 includes a transport format of an uplink and a downlink (a transport block size, a modulation and coding scheme) and a scheduler for determining (scheduling) a resource block to be assigned to the UE 100.

The RLC layer transmits data to an RLC layer of a reception side by using the functions of the MAC layer and the PHY layer. Between the RLC layer of the UE 100 and the RLC layer of the eNB 200, user data and control signal are transmitted via a logical channel.

The PDCP layer performs header compression and decompression, and encryption and decryption.

The RRC layer is defined only in a control plane which treats the control singal. Between the RRC layer of the UE 100 and the RRC layer of the eNB 200, a control signal (an RRC message) for various types of setting is transmitted. The RRC layer controls the logical channel, the transport channel, and the physical channel in response to establishment, re-establishment, and release of a radio bearer. When a connection (an RRC connection) is established between the RRC of the UE 100 and the RRC of the eNB 200, the UE 100 is in a connected state (a RRC connection state), and when the RRC connection is not established, the UE 100 is in an idle state (a RRC idle state).

ANAS (Non-Access Stratum) layer positioned above the RRC layer performs session management and mobility management, for example.

Fig. 5 is a configuration diagram of a radio frame used in the LTE system. In the LTE system, OFDMA (Orthogonal Frequency Division Multiplexing Access) is applied in a downlink (DL), and SC-FDMA (Single Carrier Frequency Division Multiple Access) is applied in an uplink (UL), respectively.

As illustrated in Fig. 5, the radio frame is configured by 10 subframes arranged in a time direction, wherein each subframe is configured by two slots arranged in the time direction. Each subframe has a length of 1 ms and each slot has a length of 0.5 ms. Each subframe includes a plurality of resource blocks (RBs) in a frequency direction, and a plurality of symbols in the time direction. Each resource block includes a plurality of subcarriers in the frequency direction. A radio resource unit is configured by one subcarrier and one symbol.

Among radio resources assigned to the UE 100, a frequency resource can be configured by a resource block and a time resource can be configured by a subframe (or slot).

In the downlink, an interval of several symbols at the head of each subframe is a region mainly used as a physical downlink control channel (PDCCH) for transmission of a downlink control signal. Furthermore, the remaining part of each subframe is a region mainly used as a physical downlink shared channel (PDSCH) for transmission of a downlink user data.

In the uplink, both end portions in the frequency direction of each subframe are regions mainly used as a physical uplink control channel (PUCCH) for transmission of an uplink control signal. Furthermore, the center portion in the frequency direction of each subframe is a region that can be mainly used as a physical uplink shared channel (PUSCH) for transmission of an uplink user data.

### (D2D communication)

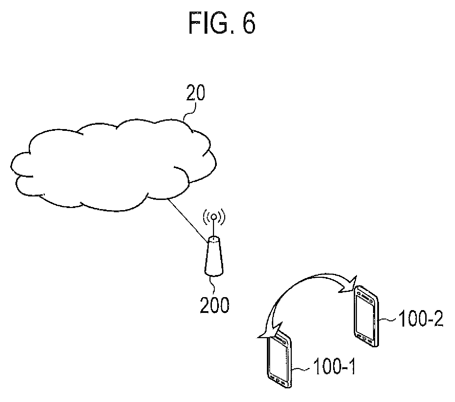

An LTE system according to the first embodiment supports D2D communication that is direct device-to-device communication (UE-to-UE communication). Fig. 6 is a diagram for illustrating D2D communication according to the first embodiment.

Hereinafter, the D2D communication is described in comparison with cellular communication that is normal communication of the LTE system. The cellular communication is a communication mode in which a data path is made through a network (E-UTRAN 10, EPC 20). The data path is a transmission path for user data.

On the other hand, as illustrated in Fig. 6, the D2D communication is a communication mode in which a data path set between UEs does not pass through the network. A plurality of UEs 100 (UE 100-1 and UE 100-2) adjacent to each other directly perform radio communication with low transmission power. A frequency band of the D2D communication may be used commonly with a frequency band of the cellular communication, or may be different from the frequency band of the cellular communication.

In the first embodiment, each one of the UE 100-1 and the UE 100-2 may recognize the other UE by a proximity discovery procedure (hereinafter referred to as "Discovery procedure"). The proximity discovery procedure is a procedure in which the proximal terminal is identified (discovered) after establishing synchronization with the proximal terminal. A Discovery procedure according to the first embodiment is described later.

A group of UEs performing the D2D communication may be called a cluster. A case in which all the UEs 100 forming the cluster are located within the cell coverage is called "In coverage". A case in which all the UEs 100 forming the cluster are located outside the cell coverage is called "Out of coverage". A case in which some UEs 100 in the cluster are located in the cell coverage and the remaining UEs 100 are located outside the cell coverage is called "Partial coverage".

In this manner, in the D2D communication, the plurality of UEs 100 in the cluster directly perform radio communication with low transmission power to reduce a power consumption of the UE 100 and to reduce interference to a neighboring cell in comparison with the cellular communication.

### (Operation according to first embodiment)

Next, operation for efficiently performing Discovery procedure according to the first embodiment is described. In the first embodiment, although an Out of coverage case or a Partial coverage case is mainly assumed, an In coverage case may also be assumed.

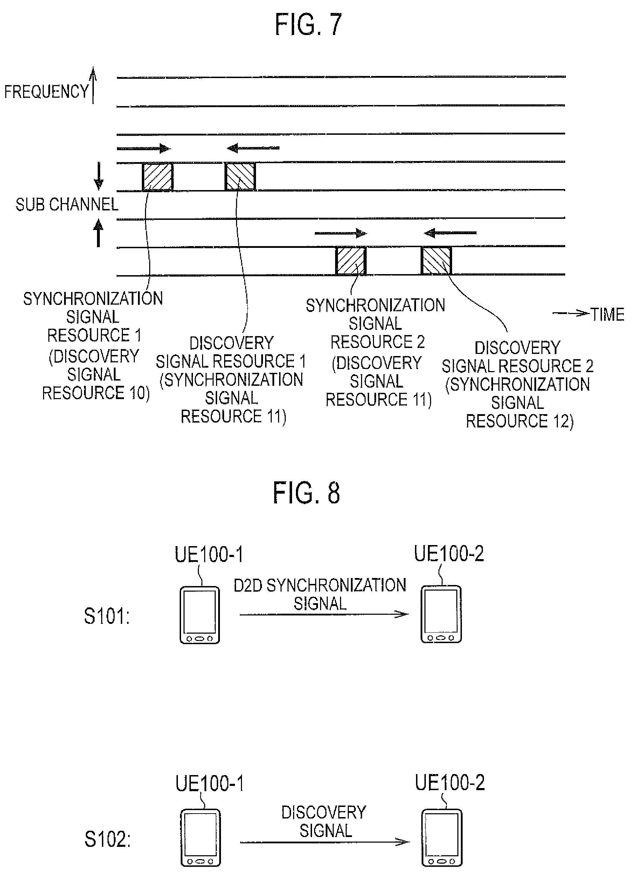

Fig. 7 is a diagram illustrating a configuration of a radio resource (time-frequency resource) according to the first embodiment. In the first embodiment, although a case is assumed where SC-FDMA is applied to the D2D communication, another scheme, such as OFDMA, may also be applied.

As illustrated in Fig. 7, the time-frequency resource available in an LTE system includes a synchronization signal resource in which a D2D synchronization signal should be located that is a synchronization signal for the D2D communication, and a Discovery signal resource in which Discovery signal should be located that is a signal for discovering a proximal terminal for the D2D communication. The Discovery signal corresponds to a D2D discovery signal, and the Discovery signal resource corresponds to a discovery signal resource.

The D2D synchronization signal has a sequence obtained by applying the cyclic shift to the orthogonal sequences as a base. The D2D synchronization signal may include a primary synchronization signal and a secondary synchronization signal. The Discovery signal includes transmission information (message). It is preferable that the Discovery signal includes an identifier of a transmission source of the Discovery signal. The Discovery signal, however, may be a signal composed only of a sequence such as described above.

The synchronization signal resource is configured by a predetermined number of sub-channels and a predetermined number of symbols. The sub-channel is a resource unit in a frequency direction, configured by a plurality of sub-carriers. The sub-channel corresponds to a resource block. Further, the Discovery signal resource is configured by a predetermined number of sub-channels and a predetermined number of symbols.

In the first embodiment, a location of the Discovery signal resource is associated with a location of the synchronization signal resource. In an example of Fig. 7, the Discovery signal resource, in a time direction, is provided with a predetermined interval to the synchronization signal resource. It is noted that the synchronization signal resource and the Discovery signal resource can be provided consecutively in the time direction (Without placing a predetermined interval). Alternatively, the synchronization signal resource and the Discovery signal resource can be provided within a same radio resource.

Further, the Discovery signal resource can be provided in a location that overlaps with the synchronization signal resource in the frequency direction or a location that does not overlap with the synchronization signal resource in the frequency direction. In Fig. 7, a case in which the location of a Discovery signal resource 1 is associated with the location of a synchronization signal resource 1 and the location of a Discovery signal resource 2 is associated with the location of a synchronization signal resource 2 is a case in which the Discovery signal resource overlaps with the synchronization signal resource in the frequency direction. On the other hand, a case in which a synchronization signal resource 11 is not associated with a Discovery signal resource 11 is a case in which the Discovery signal resource does not overlap with the synchronization signal resource in the frequency direction. It is noted that the Discovery signal resource 10 is associated with a synchronization signal resource that is not shown, and the synchronization signal resource 12 is associated with a Discovery signal resource that is not shown. Thus, a relative positional relationship between the Discovery signal resource and the synchronization signal resource is prescribed.

In the first embodiment, the number of sub-channels of the Discovery signal resource is set to the prescribed number of sub-channels. For example, the number of sub-channels of the Discovery signal resource is fixed.

Alternatively, the number of sub-channels of the Discovery signal resource is set to the same number of sub-channels as the number of sub-channels of the synchronization signal resource. For example, the number of sub-channels of the Discovery signal resource is variable depending on the number of sub-channels of the synchronization signal resource. It may be sufficient that the number of sub-channels of the Discovery signal resource may be the same as that of the synchronization signal resource, and the number of sub-carriers thereof may be different from that of the synchronization signal resource.

Fig. 8 is a diagram illustrating the Discovery procedure according to the first embodiment. In an initial state of Fig. 8, the UE 100-1 is not synchronized with the UE 100-2.

As illustrated in Fig. 8, the UE 100-1 transmits the D2D synchronization signal by using the synchronization signal resources, and transmits the Discovery signal by using the Discovery signal resources.

In step S101, the UE 100-2, for example, searches the D2D synchronization signal with the same method as cell search in cellular communication to attempt to receive the D2D synchronization signal. The UE 100-2 that has successfully received the D2D synchronization signal can be synchronized with the transmission source of the D2D synchronization signal (UE 100-1).

The UE 100-2 identifies the location of the Discovery signal resource on the basis of the location of the synchronization signal resource to which the received D2D synchronization signal is located. As described above, the location of the Discovery signal resource is associated with the location of the synchronization signal resource. Thus, the UE 100-2 uniquely identifies the location of the Discovery signal resource on the basis of the location of the synchronization signal resource.

In step S102, the UE 100-2 searches the Discovery signal for the identified Discovery signal resource to attempt to receive the Discovery signal. Thus, the UE 100-2 receives a Discovery signal transmitted from the UE 100-1 and recognizes the UE 100-1 on the basis of the received Discovery signal.

As described above, in the first embodiment, the location of the Discovery signal resource is associated with the location of the synchronization signal resource. The UE 100-2 identifies the location of the Discovery signal resource on the basis of the location of the synchronization signal resource in which the received D2D synchronization signal is located. Thus, without notifying the UE 100-2 of the information indicating the location of the Discovery signal resource separately, the UE 100-2 identifies the location of the Discovery signal resource. Therefore, the Discovery procedure can be efficiently performed.

### [Second embodiment]

For the second embodiment, difference from the first embodiment is mainly described. The second embodiment is similar to the first embodiment in regard to the system configuration.

Operation for efficiently performing the Discovery procedure according to the second embodiment is described. In the second embodiment, although an Out of coverage case or a Partial coverage case is mainly assumed, an In coverage case may also be assumed.

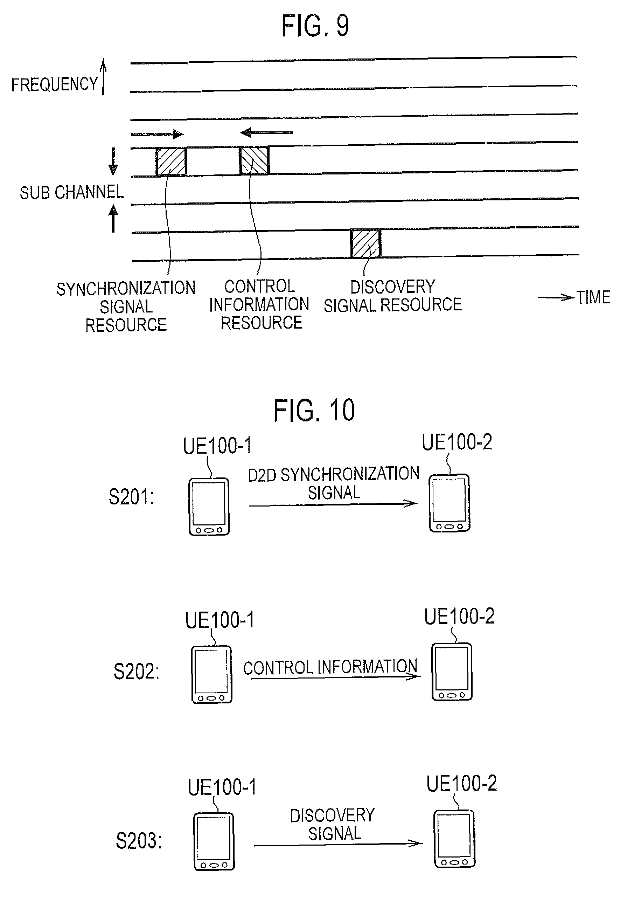

Fig. 9 is a diagram illustrating a configuration of a radio resource (time-frequency resource) according to the second embodiment. Here, differences from the first embodiment are described.

As illustrated in Fig. 9, in the second embodiment, the time-frequency resource available in the LTE system further includes the control information resource in which the control information related to the Discovery signal (hereinafter referred to as "Discovery control information") should be located. The control information resource is configured by a predetermined number of sub-channels and a predetermined number of symbols.

In the second embodiment, a location of the control information resource is associated with a location of the synchronization signal resource. In an example of Fig. 9, the control information resource, in a time direction, is provided with a predetermined interval to the synchronization signal resource. It is noted that the synchronization signal resource and the control information resource can be provided consecutively in the time direction (Without placing a predetermined interval). Alternatively, the synchronization signal resource and the control information resource can be provided within a same radio resource.

Further, the control information resource is provided in a location that overlaps with the synchronization signal resource in the frequency direction. It is noted that the control information resource can be provided in a location that does not overlaps with the synchronization signal resource in the frequency direction. Thus, a relative positional relationship between the control information resource and the synchronization signal resource is prescribed.

The Discovery control information includes a parameter related to the location of the Discovery signal resource and a parameter related to a transmission method of the Discovery signal.

The parameters related to the location of the Discovery signal resource are, for example, a sub-channel number and a symbol number configuring the Discovery signal resource. Alternatively, the parameters may include parameters for transmission resources randomization. The parameters for the transmission resources randomization are, for example, a parameter for frequency hopping, a parameter for randomizing in the time direction, and a parameter for randomizing power.

The parameters related to the transmission method of the Discovery signal resource are, for example, a parameter for transmission data randomization (such as an encryption parameter), a parameter related to a Modulation and Coding Scheme (MCS), a parameter related to transmission power of the Discovery signal, a parameter related to a reference signal sequence included in the Discovery signal, a parameter related to a cyclic prefix (CP) length, and a parameter related to a format (such as a bit length) of the Discovery signal.

The number of sub-channels of the control information resource is set to the prescribed number of sub-channels. For example, the number of sub-channels of the control information resource is fixed.

Alternatively, the number of sub-channels of the control information resource is set to the same number of sub-channels as the number of sub-channels of the synchronization signal resource. For example, the number of sub-channels of the control information resource is variable depending on the number of sub-channels of the synchronization signal resource. It may be sufficient that the number of sub-channels of the control information resource may be the same as that of the synchronization signal resource, and the number of sub-carriers thereof may be different from that of the synchronization signal resource.

In the second embodiment, the number of sub-channels of the Discovery signal resource may be set depending on a parameter related to the location of the Discovery signal resource. In this case, the number of sub-channels of the Discovery signal resource is variable depending on a parameter related to the location of the Discovery signal resource.

Fig. 10 is a diagram illustrating a Discovery procedure according to the second embodiment. In an initial state of Fig. 10, the UE 100-1 is not synchronized with the UE 100-2.

As illustrated in Fig. 10, the UE 100-1 transmits the D2D synchronization signal by using the synchronization signal resources, and transmits the Discovery signal by using the Discovery signal resources.

In step S201, the UE 100-2, for example, searches the D2D synchronization signal with the same method as cell search in cellular communication to attempt to receive the D2D synchronization signal. The UE 100-2 that has successfully received the D2D synchronization signal can be synchronized with the transmission source of the D2D synchronization signal (UE 100-1).

The UE 100-2 identifies the location of the control information resource on the basis of the location of the synchronization signal resource in which the received D2D synchronization signal is located. As described above, the location of the control information resource is associated with the location of the synchronization signal resource. Thus, the UE 100-2 uniquely identifies the location of the control information resource on the basis of the location of the synchronization signal resource.

In step S202, the UE 100-2 searches the Discovery control information for the identified control information resource to attempt to receive the Discovery signal. Thus, the UE 100-2 receives Discovery control information transmitted from the UE 100-1, and identifies the location of the Discovery signal resource and the transmission method of the Discovery signal depending on the parameters included in the received Discovery control information.

In step S203, the UE 100-2, for the identified Discovery signal resource, searches the Discovery signal transmitted by the identified transmission method to attempt to receive the Discovery signal. Thus, the UE 100-2 receives a Discovery signal transmitted from the UE 100-1 and recognizes the UE 100-1 on the basis of the received Discovery signal.

As described above, in the second embodiment, the location of the control information resource is associated with the location of the synchronization signal resource. The UE 100-2 identifies the location of the control information resource on the basis of the location of the synchronization signal resource in which the received D2D synchronization signal is located. Thus, without notifying the UE 100-2 of the information indicating the location of the control information resource separately, the UE 100-2 identifies the location of the control information resource and receives the Discovery control information. Therefore, the Discovery procedure can be efficiently performed.

### [Third embodiment]

For the third embodiment, difference from the first embodiment and the second embodiment is mainly described.

### (System configuration according to third embodiment)

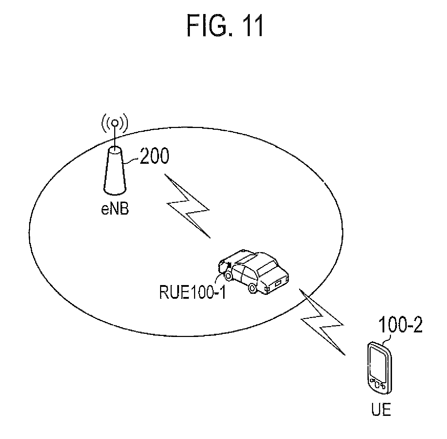

Fig.11 is a diagram illustrating a system configuration according to the third embodiment. As illustrated in Fig. 11, the LTE system according to the third embodiment has an RUE (Relay capable UE) 100-1 having ability to perform the data relay (hereinafter referred to as "D2D Relay") by utilizing the D2D communication. The RUE 100-1 corresponds to the relay terminal.

The RUE 100-1 is located inside a cell coverage, and the UE 100-2 is located outside the cell coverage. The RUE 100-1, by performing the D2D communication with the UE 100-2 while performing cellular communication with the eNB 200, relays data exchanged between the UE 100-2 and the eNB 200. Thus, even the UE 100-2 outside the cell coverage can communicate with the network.

In an example of Fig. 11, the RUE 100-1 is mounted on a vehicle. The RUE 100-1 is moved along with movement of the vehicle. That is, the RUE 100-1 is a mobile relay terminal.

To the RUE 100-1, the Discovery signal resource is assigned from the eNB 200. When the Discovery signal resource is associated with the synchronization signal resource, the RUE 100-1 identifies the synchronization signal resources on the basis of the Discovery signal resource.

Alternatively, to the RUE 100-1, the synchronization signal resource is assigned from the eNB 200. The RUE 100-1 identifies the Discovery signal resource on the basis of the synchronization signal resource assigned from the eNB 200.

### (Operation according to third embodiment)

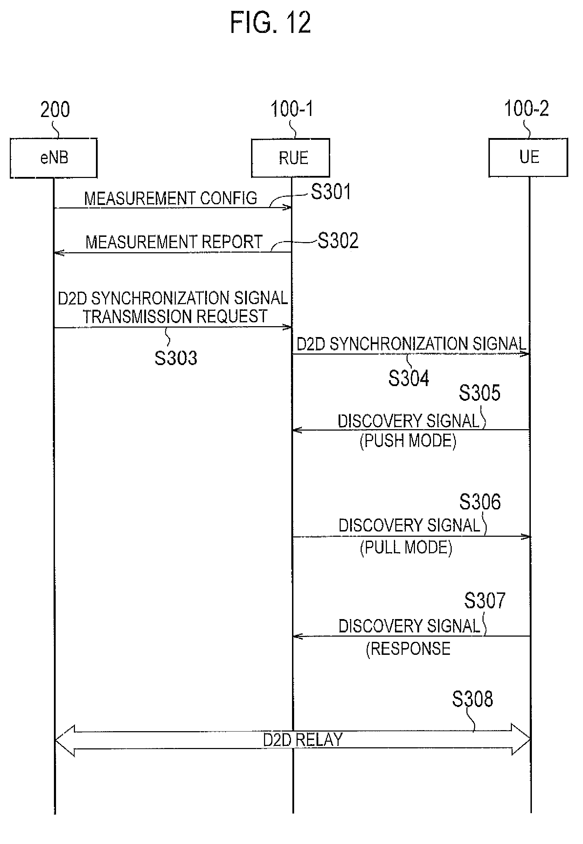

Fig. 12 is a sequence diagram illustrating operation according to the third embodiment. In an initial state of Fig. 12, the RUE 100-1 has established connection with the eNB 200, and the UE 100-2 is located outside the cell coverage.

As illustrated in Fig. 12, in step S301, the eNB 200 transmits a measurement configuration (Measurement Config) to the RUE 100-1. The RUE 100-1 that has received the measurement configuration performs the measurement in accordance with the received measurement configuration.

In step S302, the RUE 100-1 transmits a measurement report including a measurement result (Measurement Report) to the eNB 200. The eNB 200 that has received the measurement report, on the basis of the received measurement report, determines whether or not to start transmission of the D2D synchronization signal by the RUE 100-1. Here, it is assumed that it is determined to start the transmission of the D2D synchronization signal by the RUE 100-1, to proceed with the description. It is noted that details of steps S301 and S302 is described in the fourth embodiment.

In step S303, the eNB 200 requests the RUE 100-1 to start the transmission of the D2D synchronization signal. The request may include information on the Discovery signal resource assigned to the RUE 100-1. The RUE 100-1 starts the transmission of the D2D synchronization signal in response to the request. It is noted that the RUE 100-1, even when starting the transmission of the D2D synchronization signal, does not immediately start the transmission of the Discovery signal. Specifically, the RUE 100-1, only when determined that the UE 100-2 as the D2D Relay target exists, transmits the Discovery signal (corresponding to the second Discovery signal described later). Thus, reduction of power consumption and interference of the RUE 100-1 can be achieved.

In step S304, the RUE 100-1 transmits the D2D synchronization signal having a predetermined sequence. The sequence (predetermined sequence) applied to the D2D synchronization signal is a sequence different from the sequence applied to the synchronization signal for the cellular communication. The synchronization signal for the cellular communication includes a primary synchronization signal (PSS) and a secondary synchronization signal (SSS). Further, it is preferable that the sequence (predetermined sequence) applied to the D2D synchronization signal transmitted from the RUE 100-1 is a sequence different from the sequence applied to the D2D synchronization signal transmitted from a normal UE. Thus, in the third embodiment, the D2D synchronization signal transmitted from the RUE 100-1 is configured so that it can be identified that the transmission source of the D2D synchronization signal has a D2D Relay capability.

The UE 100-2 that has received the D2D synchronization signal, on the basis of the sequence of the received D2D synchronization signal, determines whether or not the transmission source of the D2D synchronization signal for the RUE has a D2D Relay capability. Further, the UE 100-2, on the basis of the location of the synchronization signal resource in which the received D2D synchronization signal is located, identifies a location of the Discovery signal resource by the method of the first embodiment or the second embodiment. Although the UE 100-2 searches the Discovery signal (corresponding to the second Discovery signal described later) at the identified Discovery signal resource, the Discovery signal is not detected at this time.

In step S305, the UE 100-2 that has determined that the transmission source of the D2D synchronization signal has a D2D Relay capability, when desiring to start the D2D Relay, transmits a first Discovery signal to the RUE 100-1 that is the transmission source of the D2D synchronization signal by using the identified Discovery signal resource. The first Discovery signal is a type (PUSH mode) of the Discovery signal that does not require a response signal to be transmitted to the first Discovery signal (Discovery response signal). It is noted that the type of the Discovery signal can be determined at an upper layer (for example, a NAS layer) than an RRC layer.

In step S306, the RUE 100-1 that has received the first Discovery signal from the UE 100-2 starts transmission of the second Discovery signal by using the Discovery signal resource. The second Discovery signal is a type (PULL mode) of the Discovery signal that requires the response signal to be transmitted to the second Discovery signal (Discovery response signal). After the transmission of the second Discovery signal is started, the UE other than the UE 100-2, by receiving the D2D synchronization signal and the second Discovery signal from the RUE 100-1, without transmitting the first Discovery signal to the RUE 100-1, can transmit the D2D response signal to the RUE 100-1.

The second Discovery signal includes information for designating the time-frequency resource (hereinafter referred to as "Discovery response signal resource") to be used for transmitting the Discovery response signal. The UE 100-2 that has received the second Discovery signal identifies the location of the Discovery signal resource by the information.

Alternatively, the location of the Discovery response signal resource is associated with the location of the Discovery signal resource. The UE 100-2 that has received the second Discovery signal, on the basis of the location of the Discovery signal resource in which the second Discovery signal is located, identifies the location of the Discovery response signal resource.

In step S307, the UE 100-2 transmits the Discovery response signal to the RUE 100-1 by using the identified Discovery response signal resource. Thus, a Discovery procedure is completed between the UE 100-2 and the RUE 100-1.

In step S308, the RUE 100-1, while performing the cellular communication with the eNB 200, by performing the D2D communication with the UE 100-2, relays data exchanged between the UE 100-2 and the eNB 200.

It is noted that the RUE 100-1 determines that the UE 100-2 as the D2D Relay target exists by receiving the first Discovery signal. The RUE 100-1, when determined that the UE 100-2 as the D2D Relay target exists, transmits the D2D synchronization signal at a predetermined transmission interval. On the other hand, the RUE 100-1, when determined that the UE 100-2 as the D2D Relay target does not exist, transmits the D2D synchronization signal at a transmission interval different from the predetermined transmission interval. Thus, the transmission intervals of the D2D synchronization signal are made to be different between before and after detecting the UE 100-2 as the D2D Relay target. For example, after detecting the UE 100-2 as the D2D Relay target, by narrowing the transmission interval of the D2D synchronization signal as compared to that before the detection, reduction of interference and power consumption of the RUE 100-1 from those before the detection can be achieved.

According to the third embodiment, an efficient Discovery procedure can be achieved when the RUE 100-1 exists.

### [Fourth embodiment]

For the fourth embodiment, differences from the first to third embodiments are mainly described. The fourth embodiment is similar to the third embodiment in regard to the system configuration. The fourth embodiment is described with focusing on a sequence between the eNB 200 and the RUE 100-1.

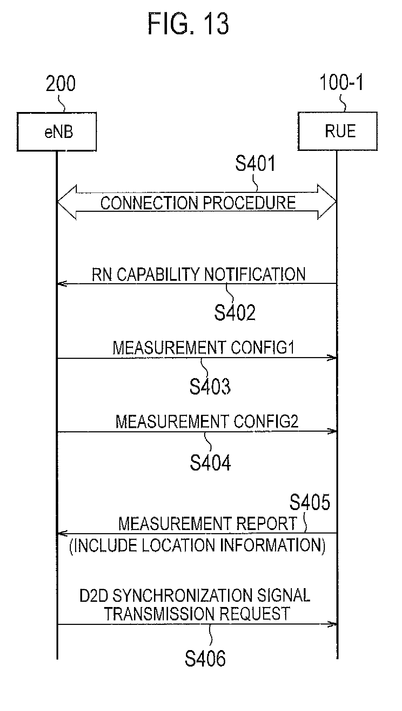

Fig. 13 is a sequence diagram illustrating operation according to the fourth embodiment. In an initial state of Fig. 13, the RUE 100-1 has not established connection with the eNB 200.

In step S401, the RUE 100-1 establishes the connection with the eNB 200. The RUE 100-1, when connecting to a network, transmits capability notification for notifying that the RUE 100-1 has capability to perform a D2D Relay, to the network (step S402).

In step S403, the eNB 200 that has received the capability notification notifies the RUE 100-1 of a normal measurement configuration 1. The normal measurement configuration 1 is a measurement configuration corresponding to a measurement report for mobility control. The normal measurement configuration 1 may be one that designates a periodic measurement report.

In step S404, the eNB 200 notifies the RUE 100-1 of a measurement configuration 2 for an RUE. The measurement configuration 2 for the RUE is a measurement configuration corresponding to the measurement report for determining whether or not to start transmitting a D2D synchronization signal identifiable as having a D2D Relay capability, and designates an event-trigger type measurement report. For example, a trigger type (event) is designated that "radio field intensity from a serving cell is equal to or less than a threshold value, and a radio field intensity from a neighboring cell is equal to or less than the threshold value."

In step S405, the RUE 100-1 transmits the measurement report to the eNB 200 when, for example, the radio field intensity from the serving cell is equal to or less than the threshold value and the radio field intensity from the neighboring cells is equal to or less than the threshold value, on the basis of the measurement configuration 2 for the RUE. The measurement report includes measurement result (such as reference signal received power) of each of the serving cell and the neighboring cell. The measurement report may include location information for identifying a geographic location of the RUE 100-1. The location information is not limited to GNSS location information, but may be information such as RF finger print and/or AoA (Angle of Arrival) information.

The eNB 200 that has received the measurement report determines, on the basis of the received measurement report, whether or not to allow the RUE 100-1 to start transmitting the D2D synchronization identifiable as having the D2D Relay capability. For example, the eNB 200 determines to allow the RUE 100-1 to start transmitting the D2D synchronization signal, when the RUE 100-1 can be regarded as being located at an area (outer area) other than a center area of a cell coverage from each measurement result of the serving cell and the neighboring cell. The eNB 200 may take the location information included in the measurement report into consideration when receiving the measurement report from a plurality of RUEs 100-1. For example, when a plurality of RUEs 100-1 regarded to be located at the outer area exist and the RUEs 100-1 are closely located, the eNB 200 determines to allow only any of the RUEs 100-1 located at the outer area to start transmitting the D2D synchronization signal.

In step S406, the eNB200 transmits a transmission request for the D2D synchronization signal to the RUE 100-1 that is determined to be allowed to start transmitting the D2D synchronization signal.

According to the fourth embodiment, it can be controlled so that a D2D Relay is performed by an appropriate RUE 100-1.

### [Fifth embodiment]

For the fifth embodiment, difference from the first to fourth embodiments is mainly described. The fourth embodiment is similar to the third embodiment in regard to the system configuration. The fifth embodiment relates to a modification of operation according to the fourth embodiment.

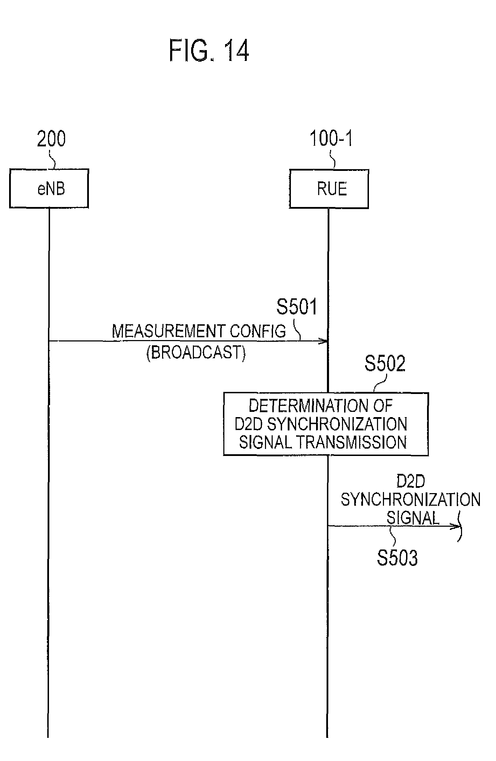

Fig. 14 is a sequence diagram illustrating operation according to the fifth embodiment. In an initial state of Fig. 14, the RUE 100-1 has not established connection with the eNB 200. That is, the RUE 100-1 is in an idle state.

As illustrated in Fig. 14, in the fifth embodiment, the eNB200 notifies the RUE 100-1 of the measurement configuration for the RUE by broadcast. By such broadcast, even the RUE 100-1 that is in the idle state can acquire the measurement configuration for the RUE.

The measurement configuration for the RUE includes a threshold value of radio intensity from a serving cell and/or a threshold value of radio intensity from a neighboring cell. As these threshold values, for example, a value of the radio intensity is set that has a level by which the RUE is considered to be located at an outer area.

In step S502, the RUE 100-1 starts monitoring of a Discovery signal or a D2D synchronization signal transmitted by another RUE when the measured radio intensity reaches the threshold value. Then, the RUE 100-1 starts transmitting the D2D synchronization signal when determined that another RUE does not exist around, by the monitoring (step S503).

According to the fifth embodiment, similarly to the fourth embodiment, it can be controlled so that a D2D Relay is performed by an appropriate RUE 100-1.

### [Other embodiments]

In the first embodiment and the second embodiment described above, an Out of coverage case or a Partial coverage case is mainly assumed.

However, in the In coverage case, the first embodiment described above can be changed as follows. Specifically, in the In coverage case, cellular communication synchronization signals (PSSs, SSSs) can be used as the D2D synchronization signal. Thus, a location of the discovery signal resource may be associated with a location of a synchronization signal resource of the cellular communication.

Further, in the In coverage case, the second embodiment described above can be changed as follows. Specifically, in the In coverage case, cellular communication synchronization signals (PSSs, SSSs) can be used as the D2D synchronization signal. Further, as a control signal resource, a PDSCH resource (SIB) or a PBCH resource (MIB) of the cellular communication can be used. Therefore, the location of the PDSCH resources (SIB) or the PBCH (MIB) resource of the cellular communication may be associated with the location of the synchronization signal resource of the cellular communication and the Discovery control information described above may be included in the SIB or MIB.

In the embodiment described above, although an LTE system is described as an example of a mobile communication system, it is not limited to the LTE system, and the present invention may be applied to a system other than the LTE system.

### [Supplementary Note]

### (1) Introduction

The clarification of request for higher layer bits needed to be visible in the discovery message transmitted at the physical layer is pursued as well as request for latency and probability of successful discovery within the latency. Thus, appropriate discovery mechanism(s) should be further discussed. Some direct discovery mechanisms were proposed and were able to reach some agreements. In this supplementary note, additional requirements for discovery message and direct discovery mechanism are discussed.

### (2) Requirements for discovery message

For the D2D Direct Discovery, focus on a D2D Discovery mechanism for in-coverage t was agreed.

On the other hand, according to the previous agreement, D2D direct communication for all four scenarios (i.e., Out of Coverage, Partial Coverage, In Coverage-Single-Cell and In Coverage-Multi-Cell) should be discussed. Therefore, direct discovery should not be limited to the in-coverage scenario and should be supported in all four scenarios.

Proposal 1: Direct discovery should be supported in all four scenarios (i.e., Out of Coverage, Partial Coverage, In Coverage-Single-Cell and In Coverage-Multi-Cell).

Then the question is whether the contents of discovery message should be the same or different among the scenarios. In order to reduce standardization effort and complexity, it should be aligned for all four scenarios. Furthermore, it should decide whether the UE specific identity needs to be included in the discovery message at the Access Stratum level, since the UE is only be able to obtain its UE specific identity while in Connected mode (i.e. RRC Connected state). Further, NAS message should be designed taking into account the assumptions listed under Proposal 4. The current assumption is that D2D interested UE should be able to discovery each other only by NAS message (i.e., without AS assistance information).

Proposal 2: The contents of the discovery message should be the same for all four scenarios.

Proposal 3: UE specific identity on Access Stratum level isn't included in the discovery message.

Proposal 4: NAS message should be designed in order to achieve the discovery requirement without any Access Stratum assistance information. Further, the number of bits necessary for transferring the required NAS message should be determined.

Assumptions;
1. Transmission of discovery messages should be supported in IDLE mode and in Connected mode.
2. It is possible for UEs to receive D2D discovery message while being IDLE and CONNECTED.
3. No need to distinguish PUSH and PULL model on Access Stratum. (It is assumed that a mechanism to trigger transmission of a D2D discovery message upon reception of another D2D discovery message can be realized by higher layers if a need is identified (if the need is confirmed)).
4. It should not distinguish open and restricted discovery on access stratum level.
5. (If agreed,) UE specific identity on Access Stratum level isn't included in the discovery message.

Regarding the discovery message length needed in the Access Stratum, it should be discussed whether other D2D related information can also be transmitted on the discovery subframe. For example, depending on the scheduling architecture adopted for D2D communication, it may be beneficial for D2D UE or the scheduling entity to be able to obtain such information through the discovery. Therefore, the required functions for D2D communication that may be provided over the Access Stratum layer should be considered.

Proposal 5: It should be discussed whether other D2D related information can also be transmitted on the discovery subframe.

### (3) Additional requirement for direct discovery mechanism

The following agreement has been made.

- transmission of discovery messages should be supported in IDLE mode and in Connected mode. In both modes the UE needs to be allowed by the NW to transmit these messages. The NW needs to be in control of the resources and transmission mode (CONNECTED and/or IDLE) that the UEs may use to transmit Discovery signals. The details (Type 1 or Type2; SIB or dedicated) are future tasks.

This agreement should also be applied to out-of-overage UEs in the partial coverage scenario. In the partial coverage scenario, one or more UEs may be within NW coverage while one or more UEs may be out-of-coverage. If the NW cannot manage the out-of-coverage UE's discovery transmission, the out-of-coverage UE may transmit a discovery signal during the time when an in-coverage UE attempts to transmit cellular Tx to the eNB. Under this condition, in-coverage D2D UE may not receive the discovery signal from out-of-coverage UE. Moreover, this discovery signal may interfere with other UEs' D2D communications and/or discovery attempts. Therefore, the NW needs to be in control of the discovery resources transmitted by the out-of-overage UEs.

Proposal 6: In the partial coverage scenario, the NW needs to be in control of the discovery resources transmitted by out-of-coverage UEs. The details are future tasks.

It is noted that the entire content of U.S. Provisional Patent Application No. 61/898760 (filed on November 1, 2013) is incorporated in the present specification by reference.

### INDUSTRIAL APPLICABILITY

As above, the mobile communication system and the user terminal according to the present invention is capable of efficiently performing the proximity discovery procedure for the D2D communication, thus, it is useful in mobile communication field.

## Claims

1. A mobile communication system including a user terminal that supports D2D communication that is direct device-to-device communication, wherein
a time-frequency resource available in the mobile communication system includes:
a synchronization signal resource in which a D2D synchronization signal that is a synchronization signal for the D2D communication should be located; and
a discovery signal resource in which a D2D discovery signal that is a signal for discovering a proximal terminal for the D2D communication should be located, and
the user terminal receiving the D2D synchronization signal identifies a location of the discovery signal resource on the basis of a location of the synchronization signal resource in which the received D2D synchronization signal is located.

2. The mobile communication system according to claim 1, wherein a location of the discovery signal resource is associated with a location of the synchronization signal resource.

3. The mobile communication system according to claim 1, wherein the number of sub-channels of the discovery signal resource is set to the prescribed number of sub-channels, or set to the same number of sub-channels as the number of sub-channels of the synchronization signal resource.

4. The mobile communication system according to claim 1, wherein the time-frequency resource available in the mobile communication system further includes a control information resource in which control information related to the D2D discovery signal should be located,
a location of the control information resource is associated with a location of the synchronization signal resource,
the control information includes a parameter related to a transmission method of the D2D discovery signal and the location of the discovery signal resource, and
the user terminal receiving the D2D synchronization signal receives the control information depending on the location of the synchronization signal resource in which the received D2D synchronization signal is located and identifies the location of the discovery signal resource and the transmission method of the D2D discovery signal depending on the parameter included in the received control information.

5. The mobile communication system according to claim 4, wherein the number of sub-channels of the control information resource is set to the prescribed number of sub-channels, or set to the same number of sub-channels as the number of sub-channels of the synchronization signal resource.

6. The mobile communication system according to claim 1, including a relay terminal having capability to perform data relay by using the D2D communication, wherein
the relay terminal transmits the D2D synchronization signal having a predetermined sequence, and
the user terminal receiving the D2D synchronization signal determines whether or not a transmission source of the D2D synchronization signal is the relay terminal on the basis of the sequence of the received D2D synchronization signal.

7. The mobile communication system according to claim 6, wherein the relay terminal transmits the D2D discovery signal only when it is determined that a user terminal as the data relay target exists.

8. The mobile communication system according to claim 6, wherein the relay terminal transmits the D2D synchronization signal having the predetermined sequence at a predetermined transmission interval when determined that a user terminal as the data relay target exists, and
the relay terminal transmits the D2D synchronization signal having the predetermined sequence at a transmission interval different from the predetermined transmission interval when determined that a user terminal as the data relay target does not exist.

9. The mobile communication system according to any one of claims 6 to 8, wherein the predetermined sequence applied to the D2D synchronization signal is different from a sequence applied to a synchronization signal for cellular communication.

10. The mobile communication system according to claim 7, wherein the user terminal determining that the transmission source of the D2D synchronization signal is the relay terminal transmits a first D2D discovery signal to the relay terminal that is the transmission source of the D2D synchronization signal by using the identified discovery signal resource when desiring start of the data relay, and
the first D2D discovery signal is a type of the D2D discovery signal that does not require a response signal to be transmitted to the first D2D discovery signal.

11. The mobile communication system according to claim 10, wherein the relay terminal receiving the first D2D discovery signal from the user terminal starts transmission of a second D2D discovery signal by using the discovery signal resource, and
the second D2D discovery signal is a type of the D2D discovery signal that requires the response signal to be transmitted to the second D2D discovery signal.

12. The mobile communication system according to claim 11, wherein the second D2D discovery signal includes information for designating a time-frequency resource to be used for transmission of the response signal.

13. The mobile communication system according to claim 11, wherein a location of the time-frequency resource to be used for the transmission of the response signal is associated with the location of the discovery signal resource, and
the user terminal receiving the second D2D discovery signal identifies the location of the time-frequency resource to be used for the transmission of the response signal on the basis of the location of the discovery signal resource in which the second D2D discovery signal is located.

14. The mobile communication system according to claim 6 including a network to which the relay terminal is connected, wherein
the relay terminal, when connecting to the network, transmits capability notification for notifying that the relay terminal has capability to perform the data relay, to the network.

15. The mobile communication system according to claim 14, wherein the network receiving the capability notification, in addition to the normal measurement configuration, notifies the relay terminal of the measurement configuration for the relay terminal, and
the measurement configuration for the relay terminal designates an event-trigger type measurement report.

16. The mobile communication system according to claim 15, wherein the relay terminal includes location information for identifying a geographical location of the relay terminal into the measurement report transmitted to the network.

17. The mobile communication system according to claim 14, wherein the network requests the relay terminal to start the transmission of the D2D synchronization signal, and
the relay terminal starts the transmission of the D2D synchronization signal in response to the request from the network.

18. The mobile communication system according to claim 6, having a network that notifies the relay terminal of the measurement configuration for the relay terminal by broadcast.

19. The mobile communication system according to claim 18, wherein the measurement configuration for the relay terminal includes a threshold value of radio intensity from a serving cell and/or a threshold value of radio intensity from a neighboring cell,
the relay terminal, when the measured radio intensity reaches the threshold value, starts monitoring of a D2D synchronization signal or a D2D discovery signal transmitted by another relay terminal, and
the relay terminal, when determined that the other relay terminal does not exist around by the monitoring, starts transmission of the D2D synchronization signal.

20. The mobile communication system according to claim 14, wherein the relay terminal identifies the synchronization signal resource on the basis of the discovery signal resource assigned from the network or identifies the discovery signal resource on the basis of the synchronization signal resource assigned from the network.

21. A user terminal that supports D2D communication that is a direct device-to-device communication, in a mobile communication system, wherein
a time-frequency resource available in the mobile communication system includes:
a synchronization signal resource in which a D2D synchronization signal that is a synchronization signal for the D2D communication should be located; and
a discovery signal resource in which a D2D discovery signal that is a signal for discovering a proximal terminal for the D2D communication is should be located, and
the user terminal comprises:
a receiving unit that receives the D2D synchronization signal; and
a control unit that identifies a location of the discovery signal resource on the basis of a location of the synchronization signal resource in which the received D2D synchronization signal is located.
